# EUROPÄISCHE PATENTSCHRIFT

(11) **EP 3 643 628 B1**
(45) Veröffentlichungstag und Bekanntmachung des Hinweises auf die Patenterteilung: **11.08.2021**
(21) Anmeldenummer: 19203453.6
(22) Anmeldetag: 16.10.2019
(51) Int. Cl.: B65B 43/14, B65B 43/16, B65B 43/18, B65B 43/20, B65B 57/04, B65H 5/02, B65H 5/16, B65H 5/34, B65H 5/08, B65H 5/10, B65G 17/32, B65H 29/00, B65H 29/04, B65B 41/04, B65H 7/14, B65B 43/46, B65G 59/06, B65H 9/06, B65H 3/04

(54) **VERPACKUNGSMASCHINE MIT TRANSPORTKETTE**
PACKAGING MACHINE WITH TRANSPORT CHAIN
MACHINE D'EMBALLAGE POURVUE DE CHAINE DE TRANSPORT

(30) Priorität: 26.10.2018 DE 102018218384
(43) Veröffentlichungstag der Anmeldung: 29.04.2020
(73) Patentinhaber: MULTIVAC Sepp Haggenmüller SE & Co. KG, 87787 Wolfertschwenden (DE)
(72) Erfinder: GUGGENBERGER, Tobias, 87700 Memmingen (DE); KOVACS, Peter, 87700 Memmingen (DE); MAIER, Robert, 87727 Babenhausen (DE); MÖßNANG, Konrad, 87439 Kempten (DE); LAU, Christian, 88178 Heimenkirch (DE)
(74) Vertreter: Grünecker Patent- und Rechtsanwälte PartG mbB

(56) Entgegenhaltungen:
- DE-A1- 2 355 921
- JP-U- H0 252 703
- US-A- 4 459 093
- US-A1- 2012 035 033

## Beschreibung

Die vorliegende Erfindung betrifft eine Verpackungsmaschine mit Transportkette zum Transportieren eines Materialzuschnitts sowie ein Verfahren zum Betrieb der Verpackungsmaschine.

Verpackungsmaschinen, insbesondere für Lebensmittelprodukte, weisen üblicherweise neben Arbeitsstationen zum Befüllen und anschließendem Versiegeln von Verpackungen auch Arbeitsstationen zum Ausformen der Verpackung selbst aus einem zugeführten Ausgangsmaterial auf. So werden beispielsweise mittels Tiefziehverfahren aus einer geeigneten Unterfolie Verpackungsschalen ausgeformt, in welche anschließend ein Lebensmittelprodukt eingelegt wird und mit einer Oberfolie luftdicht versiegelt wird. Bei der Unterfolie handelt es sich üblicherweise um ein Kunststoffmaterial, welches in Form einer Endlosbahn von einer Spenderrolle kontinuierlich zugefügt wird. Da zunehmend die Verwendung alternativer Verpackungsmaterialien relevant wird, um Umweltverträglichkeit und Recyclingfähigkeit zu erhöhen, müssen auch die Verpackungsmaschinen zur Verwendung dieser Materialien angepasst werden. Bei der Verwendung von beispielsweise beschichtetem Karton als Ausgangsmaterial für ebene Verpackungsunterlagen kann dieser jedoch nicht von einer Spenderrolle der Verpackungsmaschine zugeführt werden, sondern liegt üblicherweise als Stapel oder Reihe von flächigen Materialzuschnitten vor. Es wäre außerdem zweckmäßig, die Verpackungsmaschine so zu gestalten, dass eine Verwendung unterschiedlicher Ausgangsmaterialien möglich ist.

Aus der US 2012/0035033 A1 ist eine Vorrichtung zum Transportieren von flächigen Materialzuschnitten, insbesondere Kartonzuschnitten, bekannt. Die Materialzuschnitte werden mittels an einem Transportgurt angeordneten Klammern gegriffen, um so von diesem den einzelnen Arbeitsstationen zugeführt zu werden.

Aufgabe der vorliegenden Erfindung ist es, eine Verpackungsmaschine mit einem Transportsystem für Verpackungsmaterial bereitzustellen, wobei die Verpackungsmaschine dazu geeignet ist, Verpackungsmaterial in Form von flächigen Materialzuschnitten als Mehrfachproduktauflagen oder Packungsunterteile zu verarbeiten. Bei Mehrfachproduktauflagen können pro Materialzuschnitt mehrere Bereiche mit Produkten belegt, versiegelt und anschließend zu mehreren Verpackungen vereinzelt werden.

Die Aufgabe wird erfindungsgemäß gelöst durch eine Verpackungsmaschine gemäß Anspruch 1 und ein Verfahren zum Betrieb einer Verpackungsmaschine gemäß Anspruch 13. Vorteilhafte Weiterbildungen der Erfindung sind in den Unteransprüchen angegeben.

Eine erfindungsgemäße Verpackungsmaschine umfasst mehrere Arbeitsstationen, beispielsweise eine Siegelstation und eine Schneidstation, und eine Transportkette zum Transportieren eines flächigen Materialzuschnitts zu den Arbeitsstationen, wobei der flächige Materialzuschnitt, eine Endlos-Kunststofffolienbahn oder eine Faserstoffbahn das Ausgangsmaterial für die Verpackung ist. Des Weiteren umfasst die Verpackungsmaschine eine Kettenumlenkung, auf welcher die Transportkette gelagert ist, wobei die Transportkette wiederum Kettenklammern mit jeweils einem Oberteil und einem Unterteil umfasst, wovon das Oberteil und/oder das Unterteil schwenkbar und/oder verschiebbar ist, um die Kettenklammern zu öffnen und zu schließen. In die geöffneten Kettenklammern ist der Materialzuschnitt einbringbar und in den geschlossenen Kettenklammern ist er in diesen fixiert, sodass der Materialzuschnitt mittels der Transportkette entlang einer Transportrichtung, vorzugsweise intermittierend, bewegbar ist. Die Verpackungsmaschine weist einen Kettenöffnungsmechanismus auf, welcher dazu konfiguriert ist, aktiv betätigbar von einem Öffnungszustand in einen Schließzustand und umgekehrt zu wechseln, um mindestens eine Kettenklammer eines eben ausgerichteten Abschnitts der Transportkette reversibel zu öffnen und/oder eine bereits geöffnete Kettenklammer offen zu halten, damit der Materialzuschnitt in die Kettenklammer einbringbar ist. Vorzugsweise ist der eben ausgerichtete Abschnitt der Transportkette zumindest im Wesentlichen horizontal, das heißt innerhalb eines Winkelbereichs von -15° bis +15° zur Horizontalen, ausgerichtet. Somit kann ein flächiger Materialzuschnitt in der Transportebene der Transportkette zugeführt werden und, fixiert in einer oder mehreren Kettenklammern, von der Transportkette zur Verarbeitung weiterbefördert werden. Dabei findet kein Knicken oder Biegen des Materialzuschnitts statt und entsprechende, möglicherweise dauerhafte Materialbeeinträchtigungen, wie Knicke oder gebogene Flächen, werden vermieden. Dementsprechend sind ein korrektes Funktionieren des Siegelprozesses in der Siegelstation und eine einwandfreie Optik der Verpackung sichergestellt. Um einen sicheren Transport des Materialzuschnitts zu gewährleisten, kann es zudem zweckmäßig sein, beidseitig entlang den seitlichen Rändern der Verpackungsmaschine jeweils eine Transportkette entlang der Transportrichtung anzuordnen. Somit wird der Materialzuschnitt symmetrisch jeweils mindestens in einer rechten und eine linken Kettenklammer fixiert. Im Sinne der Erfindung ist "Transportkette" allgemein als endloses Transportmittel zu verstehen und kann beispielsweise auch einen Transportriemen umfassen.

Bevorzugt ist der Kettenöffnungsmechanismus dazu konfiguriert, eine Kettenklammer in einem Abschnitt stromabwärts der Kettenumlenkung reversibel zu öffnen. Dieser Abschnitt, welcher als mit einem oberen Scheitelpunkt der Kettenumlenkung beginnend definiert werden kann, bietet die früheste Möglichkeit, den flächigen Materialzuschnitt, vorzugsweise horizontal, in die geöffnete Kettenklammer einzubringen, um den Materialzuschnitt durch Schließen der Kettenklammer anschließend zu fixieren. Dementsprechend ist ein Zuführen der Materialzuschnitte hier am effizientesten.

Erfindungsgemäß weist die Kettenumlenkung eine Anlaufkontur auf, welche dazu ausgebildet ist, eine Kettenklammer, welche sich entlang eines Abschnitts der Kettenumlenkung befindet, zu öffnen. Somit können bereits die Kettenklammern geöffnet werden, welche sich noch vor dem ebenen Abschnitt des Kettenöffnungsmechanismus befinden.

In einer weiteren Variante ist die Anlaufkontur derart angeordnet, dass die Kettenklammer entlang eines Abschnitts im Bereich einer oberen Hälfte der Kettenumlenkung geöffnet wird, oder dass die Anlaufkontur verstellbar ist, um den Abschnitt entlang der Kettenumlenkung, in welchem die Kettenklammer geöffnet wird, einzustellen. In der oberen Hälfte der Kettenumlenkung laufen die Kettenklammern üblicherweise von unten entlang eines Kreisumfangs auf den oberen Scheitelpunkt zu und würden im geschlossenen Zustand das Zuführen des Materialzuschnitts stören. Indem die Kettenklammern also bereits geöffnet werden, wenn sie in dem Bereich des Vorschubweges des Materialzuschnitts kommen, kann dieser ungehindert durch die geöffneten Kettenklammern hindurchbewegt werden. Durch geeignete Anordnung einer Spenderrolle kann auch Kunststoffmaterial in Form einer Folienbahn den Transportketten zugeführt werden, indem die Folienbahn in besagter oberen Hälfte der Kettenumlenkung in die Kettenklammern eingefädelt wird. Ist die Anlaufkontur verstellbar, so kann die Folienbahn wahlweise auch von schräg unten im Bereich der Kettenumlenkung eingefädelt werden, und die Spenderrolle dementsprechend angeordnet sein. In beiden Varianten ist die Verpackungsmaschine also dazu geeignet, sowohl flächige Materialzuschnitte als auch Endlos-Kunststofffolienbahnen oder Faserstoffbahnen zu verarbeiten.

Zweckmäßig weist die Verpackungsmaschine eine Vorschubeinrichtung auf, welche dazu konfiguriert ist, einen Materialzuschnitt in die geöffnete Kettenklammer einzuschieben. Die Vorschubeinrichtung kann beispielsweise als Förderband oder als Schieber in Form einer pneumatisch angetriebenen Kolbenanordnung ausgebildet sein. So können die flächigen Materialzuschnitte der Transportkette synchron mit dem Arbeitstakt der Arbeitsstationen und folglich der Transportkette, und damit ohne zusätzlichen Zeitbedarf pro Arbeitstakt, zugeführt werden.

Vorzugsweise weist die Verpackungsmaschine eine Auflage auf, auf welche der Materialzuschnitt von einem Entstapler ablegbar ist, wobei die Auflage zu der geöffneten Kettenklammer derart ausgerichtet ist, dass der Materialzuschnitt in die Kettenklammer mittels der Vorschubeinrichtung eingeschoben werden kann. So kann ein Stapel von Materialzuschnitten vereinzelt werden und der einzelne Materialzuschnitt, welcher sich dann auf der Auflage in Höhe der geöffneten Kettenklammer befindet, muss nur noch in einer linearen Bewegung in Transportrichtung in die Kettenklammer eingeschoben werden. Somit ist ein einfach zu konstruierender und dem Takt der Arbeitsstation anpassbarer Zuführmechanismus bereitgestellt, dem das Ausgangsmaterial stapelweise zur Verfügung gestellt werden kann.

In einer gängigen Variante weist die Verpackungsmaschine ein seitliches Führungselement und/oder einen Schieber auf, welche dazu konfiguriert sind, den Materialzuschnitt quer zur Transportrichtung auszurichten. Dadurch ist sichergestellt, dass der Materialzuschnitt wie gewünscht parallel zur Transportrichtung ausgerichtet ist und korrekt ausgerichtet von der Kettenklammer fixiert wird. Der Materialzuschnitt berührt beim Transport zur Arbeitsstation damit keine weiteren Strukturen der Verpackungsmaschine und wird nicht beschädigt oder verschoben, was andernfalls die weitere Verwendung in der Arbeitsstation beeinträchtigen würde.

In einer bevorzugten Variante weist die Verpackungsmaschine einen einstellbaren, insbesondere entlang der Transportrichtung variabel positionierbaren, Anschlag auf, um den Materialzuschnitt entlang der Transportrichtung auszurichten. Der Anschlag stellt also auch die Position des Materialzuschnitts in Transportrichtung sicher, sodass der Materialzuschnitt nach dem Vorschub der Transportkette korrekt in der Arbeitsstation platziert ist.

Idealerweise weist der Anschlag mindestens eine, vorzugsweise zwei oder mehr Zentrierkonturen auf. Eine solche Zentrierkontur kann beispielsweise ein vertikal angeordneter Stift sein, welcher mit einer Ausnehmung an einer vorderen Kante des Materialzuschnitts in Eingriff kommt. Vorzugsweise können zwei zylindrische Stifte als Anschlag angeordnet sein, welche jeweils mit einer dreieckigen Ausnehmung des Materialzuschnitts in Eingriff kommen, wodurch dieser sowohl quer als auch längs der Transportrichtung ausgerichtet wird. Dies ist eine besonders einfach zu realisierende Möglichkeit zum Ausrichten des Materialzuschnitts, womit es auch denkbar ist, auf seitliche Führungselemente zu verzichten.

Zweckmäßig ist der Anschlag bewegbar, insbesondere schwenkbar oder vertikal verfahrbar, um in den Transportweg des Materialzuschnitts ein- und ausgefahren zu werden. So wird nach erfolgter Ausrichtung des Materialzuschnitts dessen Weitertransport ermöglicht.

In einer weiteren bevorzugten Variante ist der Anschlag mit dem Kettenöffnungsmechanismus gekoppelt. Damit erfolgen die Bewegungen beider Komponenten synchron und es ist möglich, nur einen einzigen, gemeinsamen Antrieb, beispielsweise einen Elektromotor, vorzusehen.

In einer gängigen Variante umfasst die Verpackungsmaschine einen oder mehrere Sensoren, welche dazu konfiguriert sind, Position und Ausrichtung des Materialzuschnitts zu erfassen. Entsprechend den erhaltenen Daten können beispielsweise die Vorschubeinrichtung und seitliche Schieber gesteuert werden, um den Materialzuschnitt korrekt zu positionieren. Ebenso kann die Endlage vor dem Weitertransport des Materialzuschnitts erfasst werden und, falls diese nicht den Vorgaben entspricht, eine entsprechende Warnung ausgegeben, eine Verarbeitung des Materialzuschnitts in der Arbeitsstation übersprungen oder der Materialzuschnitt aussortiert werden. Es wird also ein Feedback- und Nachregelungssystem bereitgestellt.

In einer weiteren zweckmäßigen Variante umfasst die Verpackungsmaschine einen Sauggreifer, welcher dazu konfiguriert ist, den Materialzuschnitt in die geöffnete Kettenklammer einzulegen. Mit einem Sauggreifer ist es beispielsweise möglich, die Materialzuschnitte direkt von der Oberseite eines Stapels zu nehmen, wodurch auf einen Entstapler verzichtet werden kann. Bei Kettenklammern, welche durch seitliches Aufklappen des Oberteils geöffnet werden, kann der Materialzuschnitt mittels des Sauggreifers von oben eingelegt werden, was eine exakte Positionierung ermöglicht. Ebenso ist jedoch auch weiterhin ein Einschieben parallel zur Transportrichtung möglich.

Üblicherweise ist der Kettenöffnungsmechanismus selektiv deaktivierbar. Dies ist beispielsweise dann vorteilhaft, wenn die Verpackungsmaschine anstatt der flächigen Materialzuschnitte eine Endlos-Kunststofffolienbahn verarbeitet, welche im Bereich der Kettenumlenkung in die mittels der Anlaufkontur geöffneten Transportklammern eingefädelt wird. Dabei ist es sinnvoll, die Kettenklammern spätestens mit Verlassen der Kettenumlenkung am oberen Scheitel wieder zu schließen, um die Kunststofffolienbahn sicher zu fixieren.

Der Materialzuschnitt, insbesondere aus Karton oder Faserverbundstoff ist als Mehrfachproduktauflage oder Packungsunterteil geeignet, wobei der Materialzuschnitt ein flächiges Element, insbesondere in Rechteckform, ist. An einem vorderen Rand weist der Materialzuschnitt mindestens zwei Zentrierausnehmungen auf, welche dazu geeignet sind, mit einem Anschlag einer Verpackungsmaschine in Anlage zu kommen, so dass der Materialzuschnitt längs und quer einer Transportrichtung der Verpackungsmaschine ausgerichtet ist. So kann der Materialzuschnitt in der Arbeitsstation wie vorgesehen verarbeitet werden, und es können weitere Führungselemente zur Ausrichtung weggelassen werden.

Ein erfindungsgemäßes Verfahren zum Betrieb einer Verpackungsmaschine, umfasst folgende Verfahrensschritte:
- Öffnen einer Kettenklammer mittels einer Anlaufkontur einer Kettenumlenkung,
- Aktives Betätigen eines Kettenöffnungsmechanismus, welcher dadurch von einem Schließzustand in einen Öffnungszustand wechselt, was ein Öffnen oder Offenhalten von mindestens einer von mehreren an einer Transportkette angeordneten und sich in einem eben ausgerichteten Abschnitt der Transportkette befindlichen Kettenklammern bewirkt,
- Einbringen eines flächigen Materialzuschnitts in die mindestens eine geöffnete Kettenklammer,
- Schließen der Kettenklammer,
- Transport des Materialzuschnitts zu einer Arbeitsstation.

Vorzugsweise findet das Einbringen des flächigen Materialzuschnitts in die mindestens eine geöffnete Kettenklammer statt, indem der Materialzuschnitt mittels einer Vorschubeinrichtung in die Kettenklammer eingeschoben und/oder mittels eines Sauggreifers in die Kettenklammer eingelegt wird.

Im Folgenden werden Ausführungsbeispiele der Erfindung anhand der Figuren näher beschrieben. Dabei zeigen
- Figur 1:: eine schematische Ansicht einer Verpackungsmaschine,
- Figur 2:: eine schematische Ansicht eines Materialzuschnitts in zwei geöffneten Kettenklammern,
- Figur 3:: eine schematische Ansicht einer ersten Variante einer Vorschubeinrichtung,
- Figur 4:: eine schematische Ansicht einer zweiten Variante einer Vorschubeinrichtung,
- Figur 5:: eine schematische Ansicht einer dritten Variante einer Vorschubeinrichtung,
- Figur 6:: eine schematische Ansicht eines Materialzuschnitts und eines Anschlags.

Einander entsprechende Komponenten sind in den Figuren jeweils mit gleichen Bezugszeichen versehen.

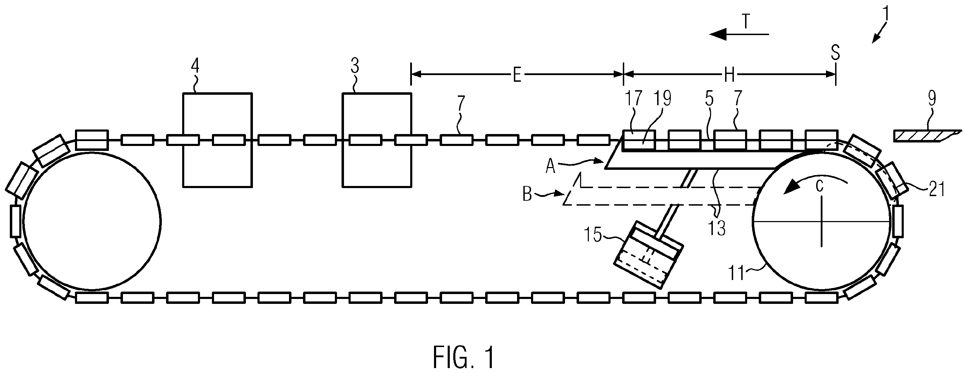

Figur 1 zeigt eine schematische Ansicht einer Verpackungsmaschine 1 mit zwei Arbeitsstationen 3, 4, beispielsweise einer Siegelstation 3 und einer Schneidstation 4, einer Transportkette 5, welche Kettenklammern 7 zum Transportieren eines Materialzuschnitts 9 entlang einer Transportrichtung T umfasst. Die Transportkette 5 ist auf einer Kettenumlenkung 11 gelagert und kann auch von dieser angetrieben werden. Im Bereich eines ebenen, vorzugsweise horizontalen, Abschnitts H der Transportkette 5 ist ein Kettenöffnungsmechanismus 13 angeordnet, welcher die Kettenklammern 7 öffnet oder offen hält, sodass der Materialzuschnitt 9 darin eingebracht werden kann. Über einen Antrieb 15 kann der Kettenöffnungsmechanismus 13 von einem Öffnungszustand A in einen Schließzustand B und umgekehrt gebracht und damit die Kettenklammern 7 geöffnet und geschlossen werden. Beim Öffnen der Kettenklammern 7 werden je ein Oberteil 17 und ein Unterteil 19 der Kettenklammern 7 gegeneinander verschoben und/oder verschwenkt, wobei eine oder beide Teile 17, 19 eine Bewegung ausführen können. Im Bereich der Kettenumlenkung 11 ist eine Anlaufkontur 21 angeordnet, welche in diesem Ausführungsbeispiel dafür sorgt, dass die Kettenklammern 7 bereits im Bereich einer oberen Hälfte C der Kettenumlenkung 11 geöffnet werden. Üblicherweise sorgt die Anlaufkontur 21 für ein Öffnen der Kettenklammern 7 bis zu einem oberen Scheitelpunkt S der Kettenumlenkung 11, und der Kettenöffnungsmechanismus 13 für das Öffnen der Kettenklammern 7 in dem anschließenden ebenen Abschnitt H. Stromabwärts schließt an den ebenen Abschnitt H ein Einlegebereich E an, in welchem Produkte auf die Produktauflagen bzw. Packungsunterteile auf- oder eingelegt werden. Im Einlegebereich E sind die Produktauflagen bzw. Packungsunterteile in Form der Materialzuschnitte 9 in den geschlossenen Kettenklammern 7 fixiert.

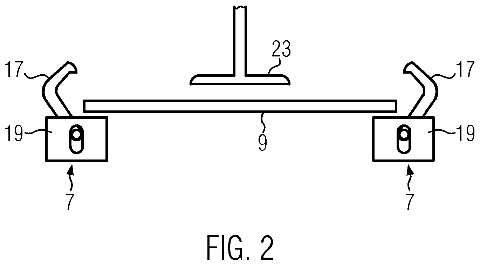

Figur 2 zeigt eine schematische Ansicht eines Materialzuschnitts 9 in zwei geöffneten und beidseitig der Transportrichtung T angeordneten Kettenklammern 7. Die Kettenklammern 7 sind dabei durch nach oben und zur Seite Schwenken der Oberteile 17 geöffnet. Bei dieser Ausführungsform kann der Materialzuschnitt 9 sowohl entlang der Transportrichtung T eingeschoben werden, jedoch auch mittels eines Sauggreifers 23 von oben eingelegt werden. Das Einlegen kann dabei durch ein gleichzeitiges Ablegen eines horizontal ausgerichteten Materialzuschnitts 9 in die beidseitig angeordneten Kettenklammern 7 erfolgen. Der Materialzuschnitt 9 kann jedoch auch schräg zuerst in die Kettenklammern 7 einer Seite eingelegt und anschließend in die Kettenklammern 7 der anderen Seite heruntergeklappt werden.

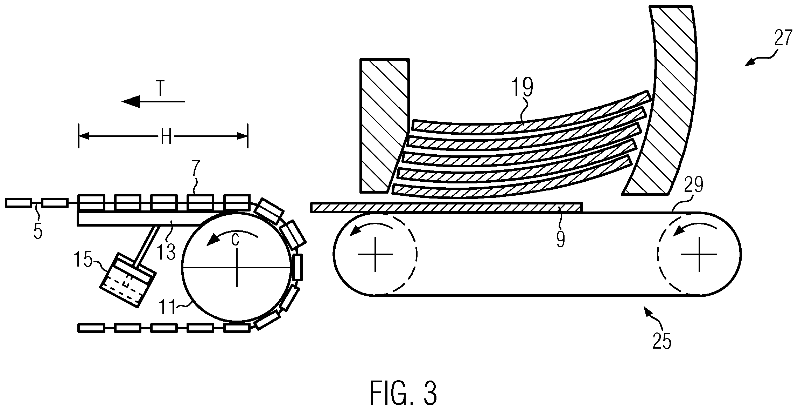

Figur 3 zeigt eine schematische Ansicht einer Variante einer Vorschubeinrichtung 25, welche Materialzuschnitte 9 von einem Entstapler 27 mittels einer Fördereinrichtung 29, beispielsweise einem Förderband, in die geöffneten Kettenklammern 7 in Transportrichtung T einschiebt. Dabei sind die Kettenklammern 7 in der oberen Hälfte C der Kettenumlenkung 11 sowie in dem ebenen Bereich H so geöffnet, dass der Materialzuschnitt 9 ungehindert in die Kettenklammern 7 eingeschoben werden kann.

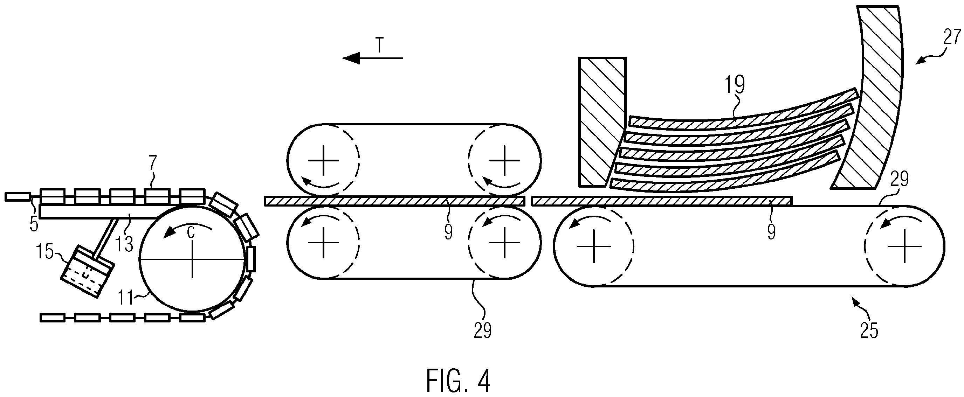

Figur 4 zeigt eine schematische Ansicht einer zweiten Variante einer Vorschubeinrichtung 25, bei welcher eine zusätzliche Fördereinrichtung 29 vorhanden ist, welche den Materialzuschnitt 9 in einer Klemmung zwischen zwei Förderbändern in Transportrichtung T bewegt. In dieser Variante ist sichergestellt, dass der Materialzuschnitt 9 mit einer wohldefinierten Kraft und Geschwindigkeit weiter transportiert wird.

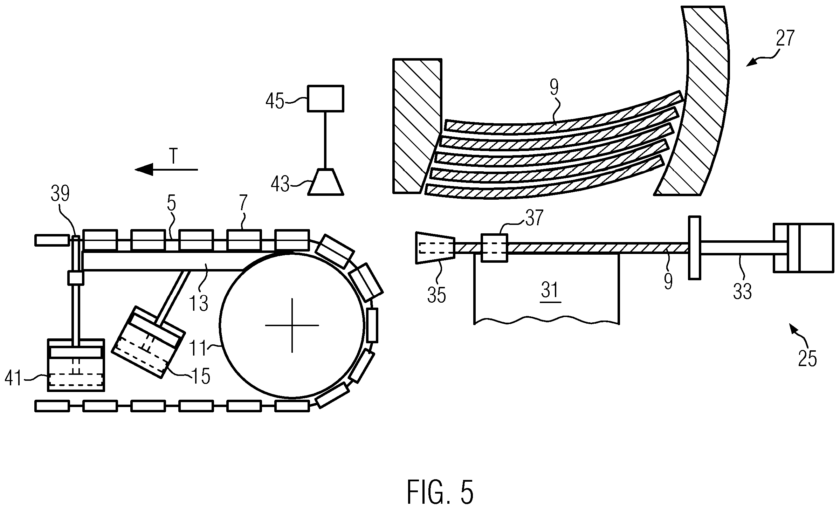

Figur 5 zeigt eine schematische Ansicht einer dritten Variante einer Vorschubeinrichtung 25, bei welcher der Materialzuschnitt 9 von dem Entstapler 27 auf einer Auflage 31 abgelegt wird und die Vorschubeinrichtung 25 in Form eines Schiebers 33 ausgebildet ist, welcher den Materialzuschnitt 9 in die Kettenklammern 7 einschiebt. Zur korrekten Positionierung quer zur Transportrichtung T sind ein- oder beidseitig ein Führungselement 35 und ein weiterer Schieber 37 vorhanden, welche auch alternativ zueinander angeordnet sein können. Desweiteren ist ein höhenverstellbarer Anschlag 39 mit einem Antrieb 41 gezeigt, welcher die korrekte Positionierung des Materialzuschnitts 9 längs der Transportrichtung T ermöglicht. Um den Transport des Materialzuschnitts 9 mittels der Transportkette 5 zu ermöglichen, wird der Anschlag 39 nach erfolgter Positionierung nach unten gefahren. Ein Sensor 43 erfasst die Position des Materialzuschnitts 9 und eine Steuerungseinheit 45 kann abhängig von ermittelten Sensordaten die Positionierung des Materialzuschnitts 9 steuern.

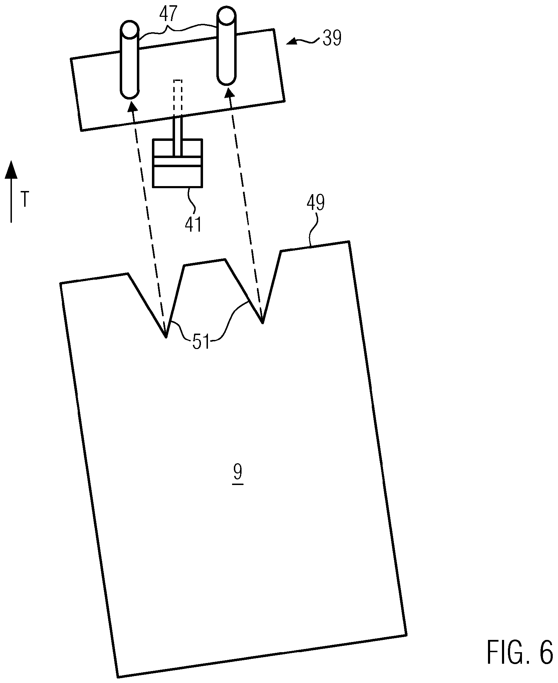

Figur 6 zeigt eine schematische Ansicht einer Ausführungsform eines Materialzuschnitts 9 und eines Anschlags 39 zur Positionierung des Materialzuschnitts 9. Der Anschlag 39 weist zwei Zentrierkonturen 47 in Form von zylindrischen Stiften auf, welche mittels des Antriebs 41 in den Fahrweg des Materialzuschnitts 9 gefahren werden können. Der Materialzuschnitt 9 weist an einem vorderen Rand 49 zwei z.B. dreieckige Zentrierausnehmungen 51 auf. Beim Einschieben des Materialzuschnitts 9 mittels der Vorschubeinrichtung 25 kommen die Zentrierkonturen 47 mit den Zentrierausnehmungen 51 derart in Eingriff, dass der Materialzuschnitt 9 sowohl längs als auch quer zur Transportrichtung T ausgerichtet ist.

Im Folgenden wird die Funktionsweise der Verpackungsmaschine 1 anhand der Figuren näher beschrieben.

Von einem Vorrat, beispielsweise einem Stapel, an Materialzuschnitten 9 wird ein Materialzuschnitt 9 vereinzelt und einer Vorschubeinrichtung 25 zugeführt, beispielsweise mittels eines Entstaplers 27. Die Vorschubeinrichtung 25 bewegt den Materialzuschnitt 9 sodann in Transportrichtung T in eine oder mehrere in einem ebenen, vorzugsweise horizontalen, Abschnitt H der Transportkette 5 geöffnete Kettenklammern 7, welche zuvor durch einen Kettenöffnungsmechanismus 13 geöffnet wurden. Dazu findet ein aktives Betätigen des Kettenöffnungsmechanismus 13 statt, welcher dadurch von einem Schließzustand B in einen Öffnungszustand A wechselt und so die Kettenklammern 7 in dem eben ausgerichteten Abschnitt H der Transportkette 5 öffnet. Beim Einschieben kann der Materialzuschnitt 9 aktiv mittels eines oder mehrerer Schieber 37 oder passiv mittels eines oder mehrerer Führungselemente 35 quer zur Transportrichtung T ausgerichtet werden. Die Position des Materialzuschnitts 9 längs der Transportrichtung T kann durch die Steuerung der Vorschubeinrichtung 25 und/oder einen Anschlag 39 ausgerichtet werden. Alternativ zum Einbringen des Materialzuschnitts 9 in die geöffneten Kettenklammern 7 mittels einer Vorschubeinrichtung 25 kann der Materialzuschnitt 9 auch mittels eines Sauggreifers 23 in die Kettenklammern 7 eingelegt werden. Nach dem Einbringen des Materialzuschnitts 9 in die Kettenklammern 7 werden diese durch Wechsel des Kettenöffnungsmechanismus 13 von dem Öffnungszustand A in den Schließzustand B geschlossen. Anschließend wird der Materialzuschnitt 9 in den Einlegebereich E sowie zu der Arbeitsstation 3 bewegt.

Ausgehend von den oben dargestellten Ausführungsformen einer Verpackungsmaschine 1 sind vielerlei Variationen derselben möglich. In einem Beispiel das nicht Teil der Erfindung ist, wäre es denkbar, die Kettenklammern 7 in Gruppen entlang der Transportkette 5 anzuordnen, wobei zwischen den Gruppen Abstände vorhanden sind, so dass keine Kettenklammern 7 entlang eines oberen Abschnitts C der Kettenumlenkung 11 vorhanden sind, wenn der Materialzuschnitt 9 in die Kettenklammern 7 eines ebenen Abschnitts H der Transportkette 5 eingeschoben wird. Somit kann auf eine Anlaufkontur 21 entlang der Kettenumlenkung 11 verzichtet werden, da keine Kettenklammern 7 die horizontale Bewegung des Materialzuschnitts 9 behindern würden.

## Patentansprüche

1. Verpackungsmaschine (1), welche geeignet ist, sowohl flächige Materialzuschnitte als auch Endlos-Kunststofffolienbahnen oder Faserstoffbahnen zu verarbeiten, mit mehreren Arbeitsstationen (3, 4), einer Transportkette (5) zum Transportieren eines flächigen Materialzuschnitts (9) zu den Arbeitsstationen (3, 4) und einer Kettenumlenkung (11), auf welcher die Transportkette (5) gelagert ist, wobei die Transportkette (5) Kettenklammern (7) mit jeweils einem Oberteil (17) und einem Unterteil (19) umfasst und das Oberteil (17) und/oder das Unterteil (19) schwenkbar und/oder verschiebbar ist, um die Kettenklammern (7) zu öffnen und zu schließen, wobei in die geöffneten Kettenklammern (7) der Materialzuschnitt (9) einbringbar ist und in den geschlossenen Kettenklammern (7) in diesen fixiert ist, sodass der Materialzuschnitt (9) mittels der Transportkette (5) entlang einer Transportrichtung (T) bewegbar ist, wobei die Verpackungsmaschine (1) einen Kettenöffnungsmechanismus (13) aufweist, welcher dazu konfiguriert ist, aktiv betätigbar von einem Öffnungszustand (A) in einen Schließzustand (B) und umgekehrt zu wechseln, um mindestens eine Kettenklammer (7) eines eben ausgerichteten Abschnitts (H) der Transportkette (5) reversibel zu öffnen und/oder eine bereits geöffnete Kettenklammer (7) offen zu halten, damit der Materialzuschnitt (9) in die Kettenklammer (7) einbringbar ist,
**dadurch gekennzeichnet, dass** die Kettenumlenkung (11) eine Anlaufkontur (21) aufweist, welche dazu ausgebildet ist, eine Kettenklammer (7), welche sich entlang eines Abschnitts der Kettenumlenkung (11) befindet, zu öffnen.

2. Verpackungsmaschine nach Anspruch 1, **dadurch gekennzeichnet, dass** der Kettenöffnungsmechanismus (13) derart konfiguriert ist, eine Kettenklammer (7) in einem Abschnitt stromabwärts der Kettenumlenkung (11) reversibel zu öffnen.

3. Verpackungsmaschine nach Anspruch 1 oder 2, **dadurch gekennzeichnet, dass** die Anlaufkontur (21) derart angeordnet ist, dass die Kettenklammer (7) entlang eines Abschnitts im Bereich einer oberen Hälfte (C) der Kettenumlenkung (11) geöffnet wird, oder dass die Anlaufkontur (21) verstellbar ist, um den Abschnitt entlang der Kettenumlenkung (11), in welchem die Kettenklammer (7) geöffnet wird, einzustellen.

4. Verpackungsmaschine nach einem der vorangegangenen Ansprüche, **dadurch gekennzeichnet,** eine Vorschubeinrichtung (25) aufzuweisen, welche dazu konfiguriert ist, einen Materialzuschnitt (9) in die geöffnete Kettenklammer (7) einzuschieben.

5. Verpackungsmaschine nach Anspruch 4, **dadurch gekennzeichnet,** eine Auflage (31) aufzuweisen, auf welche der Materialzuschnitt (9) von einem Entstapler (27) ablegbar ist, wobei die Auflage (31) zu der geöffneten Kettenklammer (7) derart ausgerichtet ist, dass der Materialzuschnitt (9) in die Kettenklammer (7) mittels der Vorschubeinrichtung (25) eingeschoben werden kann.

6. Verpackungsmaschine nach einem der vorangegangenen Ansprüche, **dadurch gekennzeichnet,** ein seitliches Führungselement (35) und/oder einen Schieber (37) aufzuweisen, welche dazu konfiguriert sind, den Materialzuschnitt (9) quer zur Transportrichtung (T) auszurichten.

7. Verpackungsmaschine nach einem der vorangegangenen Ansprüche, **dadurch gekennzeichnet,** einen einstellbaren, insbesondere entlang der Transportrichtung (T) variabel positionierbaren, Anschlag (39) aufzuweisen, um den Materialzuschnitt (9) entlang der Transportrichtung (T) auszurichten.

8. Verpackungsmaschine nach Anspruch 7, **dadurch gekennzeichnet, dass** der Anschlag (39) bewegbar, insbesondere schwenkbar oder vertikal verfahrbar ist, um in den Transportweg des Materialzuschnitts (9) ein- und ausgefahren zu werden.

9. Verpackungsmaschine nach Anspruch 8, **dadurch gekennzeichnet, dass** der Anschlag (39) mit dem Kettenöffnungsmechanismus (13) gekoppelt ist.

10. Verpackungsmaschine nach einem der vorangegangenen Ansprüche, **gekennzeichnet durch** einen oder mehrere Sensoren (43), welche dazu konfiguriert sind, Position und Ausrichtung des Materialzuschnitts (9) zu erfassen.

11. Verpackungsmaschine nach einem der vorangegangenen Ansprüche, **gekennzeichnet durch** einen Sauggreifer (23), welcher dazu konfiguriert ist, den Materialzuschnitt (9) in die geöffnete Kettenklammer (7) einzulegen.

12. Verpackungsmaschine nach einem der vorangegangenen Ansprüche, **dadurch gekennzeichnet, dass** der Kettenöffnungsmechanismus (13) selektiv deaktivierbar ist.

13. Verfahren zum Betrieb einer Verpackungsmaschine (1), umfassend folgende Verfahrensschritte:
- Öffnen einer Kettenklammer (7) mittels einer Anlaufkontur (21) einer Kettenumlenkung (11),
- Aktives Betätigen eines Kettenöffnungsmechanismus (13), welcher dadurch von einem Schließzustand (B) in einen Öffnungszustand (A) wechselt, was ein Öffnen oder Offenhalten von mindestens einer von mehreren an einer Transportkette (5) angeordneten und sich in einem eben ausgerichteten Abschnitt (H) der Transportkette (5) befindlichen Kettenklammern (7) bewirkt,
- Einbringen eines flächigen Materialzuschnitts (9) in die mindestens eine geöffnete Kettenklammer (7),
- Schließen der Kettenklammer (7),
- Transport des Materialzuschnitts (9) zu einer Arbeitsstation (3, 4).

14. Verfahren nach Anspruch 13, **dadurch gekennzeichnet, dass** das Einbringen des flächigen Materialzuschnitts (9) in die mindestens eine geöffnete Kettenklammer (7) stattfindet, indem der Materialzuschnitt (9) mittels einer Vorschubeinrichtung (25) in die Kettenklammer (7) eingeschoben und/oder mittels eines Sauggreifers (23) in die Kettenklammer (7) eingelegt wird.

## Claims

1. Packaging machine (1), adapted to process both flat material blanks as well as continuous plastic film webs or fiber material webs, with several work stations (3, 4), a transport chain (5) for transporting a flat material blank (9) to said work stations (3, 4) and a chain deflection (11) on which said transport chain (5) is mounted, where said transport chain (5) comprises chain clips (7), each having an upper part (17) and a lower part (19) and said upper part (17) and/or said lower part (19) is pivotable and/or slideable for opening and closing said chain clips (7), where said material blank (9) can be introduced into said open chain clips (7) and is secured in said closed chain clips (7), so that said material blank (9) can be moved by said transport chain (5) along a direction of transport (T), wherein said packaging machine (1) comprises a chain opening mechanism (13) configured to actively operably change from an opening state (A) to a closing state (B) and vice versa in order to reversibly open at least one chain clip (7) of a planar oriented section (H) of said transport chain (5) and/or to maintain an already opened chain clip (7) open so that said material blank (9) can be introduced into said chain clip (7), **characterized in that** said chain deflection (11) comprises a run-on contour (21) which is adapted to open a chain clip (7) which is disposed along a section of said chain deflection (11).

2. Packaging machine according to claim 1, **characterized in that** said chain opening mechanism (13) is configured to reversibly open a chain clip (7) in a section downstream of said chain deflection (11).

3. Packaging machine according to claim 1 or 2, **characterized in that** said run-on contour (21) is arranged such that said chain clip (7) is opened along a section in the region of an upper half (C) of said chain deflection (11), or **in that** said run-on contour (21) is adjustable in order to adjust said section along said chain deflection (11) in which said chain clip (7) is opened.

4. Packaging machine according to one of the preceding claims, **characterized in** comprising an advancing device (25) which is configured to push a material blank (9) into said open chain clip (7).

5. Packaging machine according to claim 4, **characterized in** comprising a support (31) on which said material blank (9) can be deposited by a destacker (27), where said support (31) is aligned with said open chain clip (7) in such a way that said material blank (9) can be pushed into said chain clip (7) by said advancing device (25).

6. Packaging machine according to one of the preceding claims, **characterized in** comprising a lateral guide element (35) and/or a pusher (37) which are configured to align said material blank (9) transverse to said direction of transport (T).

7. Packaging machine according to one of the preceding claims, **characterized in** comprising an adjustable stop (39), in particular one that is variably positionable along said direction of transport (T), in order to align said material blank (9) along said direction of transport (T).

8. Packaging machine according to claim 7, **characterized in that** said stop (39) is movable, in particular pivotable or vertically movable, to be extended into and retracted from the transport path of said material blank (9).

9. Packaging machine according to claim 0, **characterized in that** said stop (39) is coupled to said chain opening mechanism (13).

10. Packaging machine according to one of the preceding, **characterized by** one or more sensors (43) which are configured to detect the position and orientation of said material blank (9).

11. Packaging machine according to one of the preceding claims, **characterized by** a suction gripper (23) which is configured to place said material blank (9) into said open chain clip (7).

12. Packaging machine according to one of the preceding claims, **characterized in that** said chain opening mechanism (13) is selectively deactivateable.

13. Method for operating a packaging machine (1) comprising the following method steps:
- opening of a chain clip (7) by means of a run-on contour (21) of a chain deflection (11),
- actively actuating a chain opening mechanism (13) which thereby changes from a closing state (B) to an opening state (A) which causes at least one of several chain clips (7), arranged on a transport chain (5) and disposed in a planar oriented section (H) of said transport chain (5), to open or remain open,
- introducing a flat material blank (9) into said at least one open chain clip (7),
- closing said chain clip (7),
- transporting said material blank (9) to a work station (3, 4).

14. Method according to claim 13, **characterized in that** the introduction of said flat material blank (9) into said at least one open chain clip (7) preferably takes place **in that** said material blank (9) is pushed by an advancing device (25) into said chain clip (7) and/or is placed by a suction gripper (23) into said chain clip (7).

## Revendications

1. Machine d'emballage (1) convenant pour le traitement de découpes plates de matériau, mais également de bandes de film plastique sans fin ou de bandes de matériau à base de fibres, avec plusieurs postes de travail (3, 4), une chaîne de transport (5) permettant de transporter une découpe plate de matériau (9) vers les postes de travail (3, 4) et un renvoi de chaîne (11) sur lequel est montée la chaîne de transport (5), dans lequel la chaîne de transport (5) comprend des pinces de chaîne (7) avec respectivement une partie supérieure (17) et une partie inférieure (19), et la partie supérieure (17) et/ou la partie inférieure (19) peuvent pivoter et/ou coulisser afin d'ouvrir et fermer les pinces de chaîne (7), dans lequel la découpe de matériau (9) peut être introduite dans les pinces de chaîne (7) ouvertes et y est immobilisée lorsque les pinces de chaîne (7) sont fermées, de sorte que la découpe de matériau (9) peut être déplacée le long d'une direction de transport (T) au moyen de la chaîne de transport (5), dans lequel la machine d'emballage (1) présente un mécanisme d'ouverture de chaîne (13) configuré pour pouvoir passer, de manière actionnable, d'un état d'ouverture (A) à un état de fermeture (B) et inversement, afin d'ouvrir de manière réversible au moins une pince de chaîne (7) d'une section (H) orientée à plat de la chaîne de transport (5) et/ou afin de maintenir ouverte une pince de chaîne (7) déjà ouverte afin que la découpe de matériau (9) puisse être introduite dans la pince de chaîne (7), **caractérisée en ce que** le renvoi de chaîne (11) présente un contour de départ (21) conçu pour ouvrir une pince de chaîne (7) située le long d'une section du renvoi de chaîne (11).

2. Machine d'emballage selon la revendication 1, **caractérisée en ce que** le mécanisme d'ouverture de chaîne (13) est configuré de manière à ouvrir une pince de chaîne (7) de manière réversible dans une section située en aval du renvoi de chaîne (11).

3. Machine d'emballage selon la revendication 1 ou 2, **caractérisée en ce que** le contour de départ (21) est agencé de telle manière que la pince de chaîne (7) est ouverte le long d'une section dans la région d'une moitié supérieure (C) du renvoi de chaîne (11), ou **en ce que** le contour de départ (21) peut être réglé afin de régler la section, située le long du renvoi de chaîne (11), au sein de laquelle la pince de chaîne (7) est ouverte.

4. Machine d'emballage selon l'une quelconque des revendications précédentes, **caractérisée en ce qu'**elle présente un dispositif d'avancement (25) configuré pour insérer une découpe de matériau (9) dans la pince de chaîne (7) ouverte.

5. Machine d'emballage selon la revendication 4, **caractérisée en ce qu'**elle présente un support (31) sur lequel la découpe de matériau (9) peut être déposée par un dépileur (27), dans lequel le support (31) est orienté, par rapport à la pince de chaîne (7) ouverte, de telle manière que la découpe de matériau (9) peut être insérée dans la pince de chaîne (7) au moyen du dispositif d'avancement (25).

6. Machine d'emballage selon l'une quelconque des revendications précédentes, **caractérisée en ce qu'**elle comprend un élément de guidage (35) latéral et/ou un coulisseau (37) configuré(s) pour orienter la découpe de matériau (9) transversalement par rapport à la direction de transport (T).

7. Machine d'emballage selon l'une quelconque des revendications précédentes, **caractérisée en ce qu'**elle présente une butée réglable (39), en particulier pouvant être positionnée de manière variable le long de la direction de transport (T), afin d'orienter la découpe de matériau (9) le long de la direction de transport (T).

8. Machine d'emballage selon la revendication 7, **caractérisée en ce que** la butée (39) est mobile, en particulier pivotante ou déplaçable verticalement, afin d'être déplacée dans le, et hors du, chemin de transport de la découpe de matériau (9).

9. Machine d'emballage selon la revendication 8, **caractérisée en ce que** la butée (39) est couplée au mécanisme d'ouverture de chaîne (13).

10. Machine d'emballage selon l'une quelconque des revendications précédentes, **caractérisée par** un ou plusieurs capteur(s) (43) configuré(s) pour détecter la position et l'orientation de la découpe de matériau (9).

11. Machine d'emballage selon l'une quelconque des revendications précédentes, **caractérisée par** une pince aspirante (23) configurée pour mettre en place la découpe de matériau (9) dans la pince de chaîne (7) ouverte.

12. Machine d'emballage selon l'une quelconque des revendications précédentes, **caractérisée en ce que** le mécanisme d'ouverture de chaîne (13) peut être désactivé de manière sélective.

13. Procédé de fonctionnement d'une machine d'emballage (1), comprenant les étapes de procédé ci-dessous :
- ouverture d'une pince de chaîne (7) au moyen d'un contour de départ (21) d'un renvoi de chaîne (11),
- actionnement actif d'un mécanisme d'ouverture de chaîne (13) qui passe ainsi d'un état de fermeture (B) à un état d'ouverture (A), ce qui provoque l'ouverture ou le maintien ouvert d'au moins une parmi plusieurs pinces de chaîne (7) agencées au niveau d'une chaîne de transport (5) et situées dans une section (H) orientée à plat de la chaîne de transport (5),
- introduction d'une découpe plate de matériau (9) dans la au moins une pince de chaîne (7) ouverte,
- fermeture de la pince de chaîne (7),
- transport de la découpe de matériau (9) vers un poste de travail (3, 4).

14. Procédé selon la revendication 13, **caractérisé en ce que** l'introduction de la découpe plate de matériau (9) dans la au moins une pince de chaîne (7) ouverte a lieu en insérant la découpe de matériau (9) dans la pince de chaîne (7) au moyen d'un dispositif d'avancement (25) et/ou en la mettant en place dans la pince de chaîne (7) au moyen d'une pince aspirante (23).
